# EUROPEAN PATENT APPLICATION

(11) **EP 2 883 517 A1**
(43) Date of publication of application: **17.06.2015**
(21) Application number: 14188275.3
(22) Date of filing: 09.10.2014
(51) Int. Cl.: A61C 17/22

(54) **Electric toothbrush**

(30) Priority: 12.12.2013 EP 13196921
(71) Applicant: Braun GmbH, 61476 Kronberg (DE)
(72) Inventor: Kreßner, Gerhard, 63674 Altenstadt (DE)
(74) Representative: Schneider, Stefan Michael

(57) **Abstract**

An electric toothbrush may be provided by combining an attachment part (3) for an electric toothbrush (1) such as an attachable brush head and a handle section (2). The attachment part (3) has a tubular connecting piece adapted to be connected to a neck (4) of a handle section (2) of the toothbrush (1), wherein the connecting piece (7) has an inner and outer tubular structure forming a double-cone comprising an inner and an outer conical surface that face each other and that define an essentially ring-shaped groove there between, wherein the inner and outer conical surfaces are adapted to be engaged with inner and outer conical surfaces of the neck (4) of the handle section (2).

## Description

### FIELD OF THE INVENTION

There is provided an electric toothbrush. In particular, there is provided an attachment part for an electric toothbrush such as an attachable brush head, said attachment part comprising a tubular connecting piece adapted to be connected to a neck of a handle section of the toothbrush, said connecting piece having a double-cone structure comprising inner and outer conical surfaces adapted to be engaged with inner and outer peripheral surfaces of said neck of the handle section. Furthermore, said handle section of the toothbrush may have a neck provided with inner and outer peripheral surfaces which are adapted to be engaged with the inner and outer conical surfaces of the attachment part.

### BACKGROUND OF THE INVENTION

Electric toothbrushes often have removable and exchangeable attachments such as attachable brush heads so that a common handle section can be used by multiple family members, each having his or her own personal attachment part. Such attachments also allow for use of different types of attachments such as one or more different brush heads or an interdental cleaner. Moreover, in case of wear only the attachment, but not the electric toothbrush as a whole, needs to be replaced.

During operation, various forces must be transmitted by the coupling between the attachment part and the handle section of the toothbrush, including, but not limited to the cleaning forces and drive forces which may include axial and radial forces that act on the attachment part and on the handle section in terms of reaction forces. To take up such forces, the tubular connecting piece of the attachment part may be pushed onto the neck of the toothbrush so that peripheral surfaces of the connecting piece and the handle section neck come into engagement with each other to rigidly connect the attachment part to the handle section. To achieve such mating of the coupling surfaces, the attachment part may be moved axially, i.e. substantially along the longitudinal axis of the tubular connecting piece onto the neck of the handle section with the longitudinal axes of the attachment part and the handle section being in alignment. In order to prevent unintentional loosening or removal of the attachment part from the handle section, flexible locking tongs may be used, such locking tongs being able to flex away into an unlocked position for the coupling/uncoupling process and being elastically urged into a locking position when the attachment part is fully set atop the handle section.

An electric toothbrush having such attachment part and such handle section is known from, e.g., document EP 2 135 580 A1 which suggests to provide the attachment part with an interior latching element that is adapted to move into the interior of the neck of the handle section, wherein the interior latching element may be radially inwardly offset to allow a wall of the neck of the handle section to move into the gap between such interior latching element and the outer tubular end portion of the attachment part.

However, with such coupling structures using peripheral surfaces for taking up radial forces and bending moments and using interior latching elements to take up axial forces, it is difficult to combine a secure and sufficiently rigid connection during operation with easy operation of the coupling allowing engagement and disengagement with low operation forces. In particular, so as to hold the mating conical surfaces in form-fitting engagement with each other, the latching element needs to be sufficiently strong to prevent the said mating conical surfaces from unintentional disengagement due to axial loosening. On the other hand, such high-strength latching elements are usually difficult to operate when coupling or uncoupling the attachment. Such problems become more severe due to tolerances of the mating surfaces in shape as well as in dimension, thereby causing either play or problems in getting the latching element locked. In particular when a drive train extending from the handle section to the attachment's working head carries out oscillating radial and/or axial movements as it is the case with multiple linkage trains, multi-axial forces and bending moments act on the mating coupling surfaces, thus increasing the tendency of the coupling to become disengaged and furthermore, creating the impression of resilient and flabby handling with looseness of the coupling allowing for micro-movements of the attachment part relative to the handle section.

Accordingly, it is an objective to provide an improved electric toothbrush and attachment parts thereof that overcome the aforementioned shortcomings of the prior art and further develop the prior art. It is another objective to allow for an easy to operate coupling of the attachment part to the toothbrush handle section securely taking up axial and radial operation and driving forces and bending moments as well as resulting reaction forces and moments. It is a still a further objective to reduce undesired effects of tolerances and to achieve a play-free coupling of the attachment part to the handle section to provide for an exact handling and a tight, direct responsiveness to exactly transform movements of an operator's hand gripping the handle section into corresponding movements of the working head of the attachment part.

### SUMMARY OF THE INVENTION

In accordance with one aspect, there is provided an attachment part (3) for an electric toothbrush, comprising a tubular connecting piece adapted to be connected to a neck of a handle section of the toothbrush, wherein the connecting piece having an inner and outer tubular structure forming a double-cone comprising an inner and an outer conical surface that face each other and that define an essentially ring-shaped groove there between, wherein the inner and outer conical surfaces are adapted to be engaged with inner and outer conical surfaces of the neck of the handle section.

In accordance with another aspect, there is provided a handle section of an electric toothbrush, comprising a neck having a double-cone of an inner and an outer conical surface adapted to be engaged with inner and outer conical surfaces of an attachment part, wherein both the inner and outer conical surfaces of the neck are oriented into opposite directions with respect to each other.

In accordance with another aspect, there is provided a toothbrush comprising a handle section and an attachment part as described herein.

### BRIEF DESCRIPTION OF THE DRAWINGS

These and other features will become apparent not only from the claims but also from the following description and the drawings, with the aid of which example embodiments are explained below.
- Fig. 1:: shows a partial sectional view of an example electric toothbrush, wherein an attachable brush head can be fixedly attached to the neck of a handle section by means of a double cone including pairs of inner and outer conical surfaces;
- Fig. 2:: shows an enlarged cross-sectional view of an example of the engaging conical surfaces of the double cone for coupling the tubular connecting piece of the attachment part to the neck of the handle section; and
- Fig. 3:: shows an enlarged, fractional cross-sectional view of an example of the engaged pairs of conical surfaces of the double cone for coupling the attachment part to the handle section neck, wherein exemplary locking elements for axially locking the attachment part onto the handle section neck are associated with inner conical surfaces.

### DETAILED DESCRIPTION OF THE INVENTION

The following is a description of numerous versions of an attachment part and a handle section suitable to be connected in order to form an electric toothbrush. The description is to be construed as exemplary only and does not describe every possible embodiment since describing every possible embodiment would be impractical, if not impossible, and it will be understood that any feature, characteristic, structure or component described herein can be deleted, combined with or substituted for, in whole or in part, any other feature, characteristic, structure or component. In addition, single features or (sub)combinations of features may have inventive character irrespective of the feature combination provided by the claims, the respective part of the specification or the drawings.

The term "conical surface" as used in the present disclosure is a portion of the lateral surface of a in particular right cone as known from elementary geometry, where the portion is defined by at least a segment of the lateral surface of the in particular right cone. In particular, this segment may be the lateral surface lying essentially between two planes that are perpendicular to the axis of the cone. This may also be described as the lateral surface of a frustum of a cone (i.e. the lateral surface of a truncated cone).

The term "double cone" as used in the present disclosure means an arrangement of two conical surfaces that are opposite to each other and that have different orientation. Either, the two conical surfaces face each other such that a tapered, essentially ring-shaped groove extends between the two conical surfaces or the two conical surfaces are outer surfaces of a tapered, essentially tubular structure. A double cone may also be represented by more than two conical surface segments as will be more fully explained in the following.

According to an aspect there is provided a coupling between a handle section and an attachment part of an electric toothbrush including a double cone with inner and outer conical surfaces at the handle section and at the attachment part, respectively. In particular, the attachment part comprises a double cone structure comprising two ring-shaped tubular structures of different diameters so that an inner tubular portion extends within the interior of an outer tubular portion with a ring-shaped groove or gap defined there between. The two ring-shaped tubular structures may have a cross-section extending fully over 360°. In an alternative embodiment, the inner and the outer tubular structures each or both may consist of a plurality of conical frustum fractions which together form a cone, wherein the conical frustum fractions represent at least 60%, in particular at least 80%, more particularly at least 90% of the cone cross section. The inner and the outer tubular structures are connected to each other inside of the attachment part so that the two cones (i.e. the double cone) form a gap or groove between the two conical walls. The inner and outer conical surfaces face each other within the gap or groove defined there between forming the double cone structure. The opening of the gap or groove is located at the end of the attachment part which is intended to be connected to the handle section.

In addition, the handle section may comprise a complementary double cone structure. The double cone structure of the handle section may be formed by two ring-shaped tubular structures, wherein the outer tubular structure forms the neck onto which the replacement part is put. The inner tubular structure is located inside the neck and is adapted to be located inside of the inner tubular structure of the attachment part. Alternatively, the double cone structure of the handle section may be formed by the outer tubular structure, namely the neck, and the inner tubular structure may be represented by the drive shaft so that a gap or groove is formed between the neck and the drive shaft, wherein the inner tubular structure of the attachment part can be placed.

Such double cone(s) allow(s) for play-free engagement and take(s) up multi-axial forces and moments even when tolerances in shape and dimensions are present. Thus, the presented coupling provides a precise, secure and easy to operate coupling of the attachment part to the handle section of an electric toothbrush. Thereby an exact handling and a tight, direct responsiveness to exactly transform movements of an operator's hand gripping the handle section into corresponding movements of the working head of the attachment part is provided.

To provide for such a precise, secure and easy to operate coupling of the attachment part to the handle section, a double cone at the handle section neck and the tubular connecting piece of the attachment part, respectively, is provided such double cone including two pairs of conical surfaces adapted to be engaged with each other. The tubular connecting piece of the attachment part has inner and outer conical surfaces adapted to be engaged with inner and outer conical surfaces of the neck of the handle section, wherein both inner and outer conical surfaces are oriented into opposite directions and form a double cone to be engaged with the neck of the handle section. That means the inner conical surface of the attachment part may have a diameter that becomes smaller towards the neck of handle section whereas the outer conical surface of the attachment part may have a diameter that becomes larger toward the handle section. Thus, the gap or groove defined between the inner and outer conical surfaces becomes larger towards the handle section. In other words, the double wall structure of the attachment part may be adapted to receive the tubular or ring-shaped neck of the handle section in between the inner tubular wall and the outer tubular wall of the double cone structure. The inner and outer conical surfaces of the neck of the handle section also may be oriented into opposite directions and forming a double cone to be engaged with the inner and outer conical surfaces of the attachment part. That means the inner conical surface of the neck may have a diameter that becomes larger towards the attachment part whereas the outer conical surface of the neck may have a diameter that becomes smaller toward the attachment part. Due to the orientation of the cone parts into opposite directions, a snugly fitting engagement can be achieved even when tolerances are given. Furthermore, the counter-inclination of the pairs of conical surfaces which engage with each other allows for a more balanced absorbing of the forces acting on the coupling since shear forces resulting from the inclination of the conical surfaces act in opposite directions, thereby achieving at least some compensation and balancing of the shear reaction forces.

The tubular connecting piece of the attachment part may have an inner cone that can be inserted into the interior of the neck of the handle section, and, in addition, may have an outer cone into which the neck of the handle section may be inserted. In addition, the neck of the handle section may represent an outer cone that is inserted into the groove between the inner and outer tubular wall of the connecting piece of the attachment part, and the drive shaft may be inserted into the inner tubular cone of the connecting piece of the attachment part. Alternatively, the neck of the handle section may have an inner cone that is inserted into the interior of the tubular connecting piece of the attachment part, and furthermore an outer cone that allows for insertion of an end portion of the tubular connecting piece of the attachment part.

The inner and outer conical surfaces of the tubular connecting piece of the attachment part and/or the inner and outer conical surfaces of the neck of the handle section define a ring-like groove between each other. Said groove may have a width increasing towards the handle section.

An inner one of the conical surfaces of the attachment part to be engaged with the inner peripheral surface of the neck of the handle section may have a cross-sectional diameter that becomes smaller towards the neck of the handle section, whereas an outer one of the conical surfaces of the attachment part to be engaged with the outer conical surface of the neck of the handle section may have a cross-sectional diameter that becomes larger towards the handle section-sided end of the tubular connecting piece. Such counter-inclination of the inner and outer conical surfaces combines easy operation with immunity against tolerances and a certain balancing of reaction forces.

The pairs of conical surfaces may be positioned at different sections of the tubular connecting piece of the attachment part and the neck of the handle section. To allow for a precise press-fit and a certain clamping of the respective counterpart, the conical surfaces may be positioned coaxially to each other at axial portions of the connecting piece overlapping each other. In particular, the conical surfaces at the end portion of the tubular connecting piece of the attachment part may face each other so as to clamp the conical surfaces of the neck of the handle section arranged back to back. In the alternative, it would be possible to have the inner and outer conical surfaces of the attachment part slightly eccentrically offset with their axes relative to each other and/or slightly offset in axial direction. However, a coaxial arrangement of the inner and outer conical surfaces overlapping each other in the axial direction allows for a more precise press-fitting and clamping, thus achieving a more secure connection and coupling. In addition or alternatively, the dimension of the inner tubular portion of the attachment part may be larger than the dimension of the outer tubular portion in the longitudinal direction of the tubular attachment part. That means, the inner tubular portion may extend from the outer tubular portion of the attachment part so that the inner tubular portion reaches deeper into the handle section after connection of the handle section and the attachment part. Such an arrangement further improves stability of the connection.

The conical surfaces of the attachment part and/or of the neck of the handle section may have various shapes, in particular cross-sectional shapes and inclinations. For example, the conical surfaces of the attachment part and the handle section neck may define circular cross-sections. Alternatively, the conical surfaces could have non-circular cross-sections such as elliptical cross-sections, oval cross-sections or polygonal-like cross-sections.

Depending on the desired strength of the coupling forces, the conical surfaces may define full cones extending fully over 360°, or, in the alternative, may include two or more of conical segments separated from each other by one or more separation unit(s), such as a slot-like recess. If the conical surface is formed by two or more conical segments, the conical segments and the separation unit(s) together define a cone. For example, the inner conical surface of the attachment part may include two or more conical surface parts separated from each other by slots which may extend in planes containing the cone axis, wherein at least 60%, in particular 80% and more particular at least 90% of the cone are formed by the segments. In order to achieve higher clamping forces, the conical surfaces may define full cones free of slots and having full 360° cross-sections, thereby providing an increased stiffness against flexing and bending the conical surfaces.

The inclination of the conical surfaces may vary, wherein inclination angles ranging from 2x1° to 2x10° achieve a good compromise between exact snug press-fitting even with tolerances, sufficiently high clamping forces and easy operation in terms of uncoupling and coupling with limited operation forces. Basically, all conical surfaces of the double cones at the attachment part and the handle section neck may have the substantially same angles of inclination. For example, each of the inner and outer conical surfaces of the tubular connecting piece and the handle section neck may be inclined relative to the longitudinal axis of the toothbrush at an angle from 3° to 6°, from 3° to 5°, from 3° to 4° or any other numerical range which is narrower and which falls within such broader numerical range, as if such narrower numerical ranges were all expressly written herein. For example each of the inner and outer conical surfaces of the tubular connecting piece and the handle section neck may be inclined relative to the longitudinal axis of the toothbrush at an angle of 3.5°.

Alternatively, the pairs of conical surfaces engageable with each other may have different angles of inclination. For example, the outer conical surfaces of the attachment part and the handle section neck to be engaged with each other may have a smaller inclination whereas the inner conical surfaces of the attachment part and the handle section neck to be engaged with each other may have a larger inclination. For example, the pair of inner conical surfaces to be engaged with each other may define an angle of inclination ranging from 2x3° to 2x10°, or from 2x4° to 2x10°, or from 2x5° to 2x10° or any other numerical range which is narrower and which falls within such broader numerical range, as if such narrower numerical ranges were all expressly written herein. In particular, the pair of inner conical surfaces to be engaged with each other may define an angle of inclination of 2x7°. In addition, the pair of outer conical surfaces to be engaged with each other may define an angle of inclination of 2x1.5° to 2x6°, or from 2x2° to 2x5°, or from 2x2.5° to 2x4° or any other numerical range which is narrower and which falls within such broader numerical range, as if such narrower numerical ranges were all expressly written herein. In particular, the pair of outer conical surfaces to be engaged with each other may define an angle of inclination 2x3.5°. Giving the inner conical surfaces an inclination angle larger than the inclination angle of the outer conical surfaces takes into account for the different strengths of tubular structures against radial inward pressure and radial outward pressure, more particularly the fact that a tubular structure has less strength against pressing the structure together and a larger strength against pulling or pushing tubular wall segments outwardly. Generally, different sets of inclination angles allow for an advantageous compensation of multi-axial forces and moments having varying orientations.

In addition, a latching mechanism may be associated with and/or integrated into at least one pair of mating conical surfaces, such latching mechanism locking the coupling surfaces in the engaged position against axial movement, or at least hindering such axial movement or providing increased resistance against such axial movement. In particular, at least one or one pair of conical surfaces at the attachment part and the handle section neck to be engaged with each other may be provided with an undercut locking contour in terms of a projection and/or recess adapted to be brought into form-fitting engagement when putting the attachment part and the handle section neck together. In addition or alternatively, such locking contour of the conical surface may include a rip-shaped or thorn-like projection extending radially outwards from an inner one of the conical surfaces of the attachment part and/or radially inwards from the inner one of the conical surfaces of the handle section neck. When the inner conical surface of the attachment part is provided with such radially extending projection, the inner conical surface of the handle section may include a recess to be engageable with such projection. In addition or alternatively, when the inner conical surface of the handle section neck is provided with such radially extending projection, the inner conical surface of the attachment part may be provided with a recess to allow for engagement with the projection of the conical surface of the handle section neck.

In addition, such locking contour may be adapted to hold the pairs of conical surfaces in press-fitting engagement and/or may be adapted to be engageable only when both conical surfaces of the attachment part are in press-fitting engagement with the respective pair of conical surfaces at the handle section neck.

To allow for disengagement of the said locking contour by axial movement of the coupling parts relative to each other, i.e. moving the attachment part relative to the handle section or vice versa in the longitudinal direction of the toothbrush, the said locking contour may include an undercut surface radially extending from the conical surface with which the locking contour is associated. Said undercut may extend from the conical surface at an obtuse angle, for example at an angle ranging from 95° to 110°, or ranging from 95° to 100° or any other numerical range which is narrower and which falls within such broader numerical range, as if such narrower numerical ranges were all expressly written herein. Use of such an obtuse angle combines sufficiently strong holding forces in the locking position with still easy operation. When disengaging the attachment part from the handle section, the said obtuse angle helps in deflecting the latching contour or locking contour so that the projection on one of the conical surfaces may recess in the other conical surface and over such other conical surface.

In addition or alternatively, the locking contour may be provided at different portions of the respective conical surface. In particular, it may be provided within a middle section of the respective conical surface or, in the alternative, at an edge portion of the respective conical surface.

In the following, a detailed description of several example embodiments will be given. It is noted that all features described in the present disclosure, whether they are disclosed in the previous description of more general embodiments or in the following description of example embodiments, even though they may be described in the context of a particular embodiment, are of course meant to be disclosed as individual features that can be combined with all other disclosed features as long as this would not contradict the gist and scope of the present disclosure. In particular, all features disclosed for either one of the attachment parts for an electric toothbrush or the handle section of an electric toothbrush may also be combined and/or applied to the combined electric toothbrush itself, if applicable.

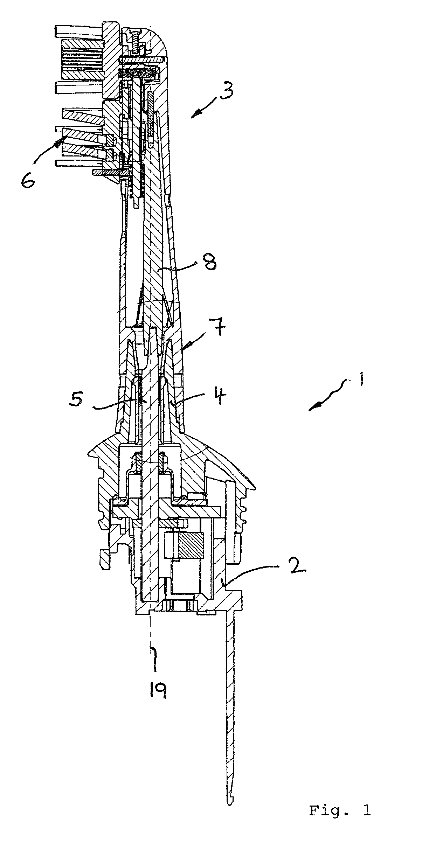

As shown in Fig. 1, a toothbrush 1 may comprise an elongate, substantially stick-shaped or rod-shaped handle section 2 and an attachment part 3 connected thereto, wherein said attachment part 3 may be formed as an attachable brush having a working head 6 comprising a bristle field. The working head shown in Fig. 1 as well as the bristle field shown in Fig. 1 are given as an example only and shall not limit the scope of the invention. In particular, other bristle field may be mounted to the working head and/or the attachment part 3 may include various other working heads with other cleaning or massaging tools such as, e.g., an interdental cleaning pin, rubber elements, elastomeric elements of various materials and/or shapes, massaging soft plastics cushions or combinations thereof.

The handle section 2 may include a housing that may accommodate a drive motor and an energy supply unit such as, e.g. a rechargeable battery and a charger coil, and furthermore, a control unit for controlling the toothbrush operation, wherein an actuating switch for switching the drive on and off may be provided on the housing. At one of the end faces of the handle section 2 the housing of the handle section 2 may form a neck 4 which may serve as a connecting piece intended to be connected with the attachment part 3. In addition, said neck 4 is truncated or frustum-shaped and has inner and outer peripheral surfaces 11 and 12 which are conically shaped.

A drive shaft 5 which can be driven in any moving fashion, may extend from the end face of the neck 4 into the tubular connecting piece 7 of the attachment part 3. Said attachment part 3 may comprise a working head 6 that can be driven in any fashion that is transferred from the drive shaft 5 to the working head 6. For example, the working head 6 may be driven in rotationally oscillating fashion about at least one axis and/or may execute axially oscillating movements. The working head 6 is supported on the tubular connecting piece 7 which has overall a substantially tubular shape and which can be pushed onto the neck 4 of the handle section 2 with an end portion. Inside the tubular connecting piece 7, the attachment part 3 may include an attachment shaft 8 that can be coupled to the drive shaft 5 of the handle section 2.

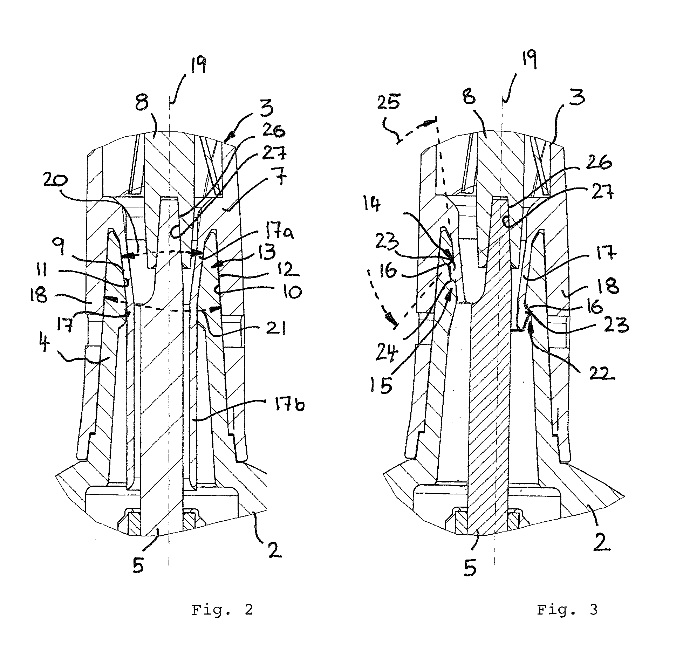

As can be seen from Fig. 2, the end portion of the tubular connecting piece 7 includes a bifurcated end structure with two sleeve-like tubular portions of different diameters so that an inner tubular portion extends within the interior of an outer tubular portion with a ring-shaped groove or gap defined therebetween. The inner tubular portion 17 may be adapted to be inserted into the interior of the neck 4 of the handle section 2, whereas the outer tubular portion 18 may be adapted to be put onto the neck 4. In other words, the double wall structure of the end portion of the connecting piece 7 may be adapted to receive the tubular or ring-shaped neck 4 of the handle section 2 in between the inner tubular wall 17 and the outer tubular wall 18 of said double wall structure.

The double wall structure at the handle section-sided end of the connecting piece 7 may in particular form a double cone, wherein the outer peripheral surface of the inner tubular portion 17 may form an inner conical surface 9 to be engaged with an inner conical surface of the neck 4, whereas the inner conical surface of the outer tubular portion 18 may form an outer conical surface 10 to be engaged with the outer conical surface of the neck 4. The inner and outer conical surfaces 9 and 10 may extend substantially coaxially to each other and may be positioned in terms of their axial arrangement at substantially the same section of the tubular connecting piece 7 so that the inner and outer conical surfaces 9 and 10 overlap each other with regard to the longitudinal direction of the attachment part 3. Thereby, the inner and outer conical surfaces 9 and 10 may face each other with gap or groove 13 defined there between forming the double cone structure.

Both the inner and outer conical surfaces 9 and 10 may have a cross-section of the respective cone being circular. The conical surfaces 9 and 10 may be oriented into directions opposite to each other, wherein the inner conical surface 9 may have a diameter that becomes smaller towards the neck 4 of handle section 2 and whereas the outer conical surface 10 may have a diameter that becomes larger toward the handle section 2. Thus, the gap or groove 13 defined between the inner and outer conical surfaces 9, 10 becomes larger towards the handle section 2.

In addition or alternatively, the dimension of the inner tubular portion 17 comprising the inner conical surface 9 may be larger than the dimension of the outer tubular portion 18 comprising the outer conical surface 10 in the longitudinal direction of the tubular attachment part 3. That means, the inner tubular portion 17 together with the inner conical surface 9 extends from the outer tubular portion 18 of the attachment part 3. Alternatively, the inner tubular portion 17 of the end section of connecting piece 7 which inner tubular portion 17 forms the aforementioned inner conical surface 9 may extend beyond the aforementioned conical surface, wherein the conical section 17A may be continued with a substantially cylindrical section 17B.

In addition or alternatively, both the inner and outer tubular portions 17 and 18 of the connecting piece 7 may be formed as fully ring-shaped tubular structures having a cross-section extending fully over 360°. In the alternative, the cones formed by the inner and outer tubular portions 17 and 18 each or both may consist of a plurality of conical frustum fractions which together form a cone (not shown). For example, the respective cones may comprise longitudinal slot-like recesses or grooves to increase flexibility. If the inner and/or outer tubular portions 17 and 18 are formed by a plurality of conical frustum fractions at least 60%, in particular at least 80% of the cone is formed by the fractions.

In addition, the inner and outer conical surfaces 9 and 10 may snugly fitting to the inner and outer conical surfaces 11 and 12 of the neck 4 which peripheral surfaces 11 and 12 may be arranged coaxially to each other and back to back at substantially the same axial sections of the neck 4. In particular, the inner and outer conical surfaces 11 and 12 may each have a conical shape, wherein the orientation of the respective cones may be opposite to each other. In addition, the said inner and outer conical surfaces 11 and 12 of the neck 4 may be configured to be complementary in shape and dimension to the inner and outer conical surfaces 9 and 10 of the connecting piece 7 of the attachment part 3.

In addition or alternatively, the angles of inclination of the pair of inner conical surfaces 9 and 11 may differ from the angle of inclination of the pair of outer conical surfaces 10 and 12 engaging each other, wherein such differing of the angles of inclination may not only be given in terms of orientation or positive/negative preceding sign, but also in terms of absolute value or amount. In particular, the inner conical surfaces 9 and 11 may be inclined relative to the longitudinal axis 19 of the toothbrush 1 which, at the same time, can be the longitudinal axis of the handle section 2 as well as of the attachment part 3, at an angle that is larger than the angle of inclination at which the outer conical surfaces 10 and 12 are inclined relative to said longitudinal axis 19. For example, the inner conical surfaces 9 and 11 may define a cone having an angle 20 of conical inclination of 2x7°. The pair of outer conical surfaces 10 and 12 may define a cone having an angle 21 of conical inclination of 2x3.5°.

All features disclosed in Fig. 2, whether described individually or in combination are also applicable to the attachment part 3 and the handle section 2 shown in Fig. 3. Features that are in common in both Figs. 2 and 3 are designated with the same reference numerals and are not described in detail again.

At least one pair of conical surfaces to be engaged with each other may be provided with a latching mechanism 22 which may include a pair of engageable undercut locking contours 14 and 15 (Fig. 3). For example, the pair of inner conical surfaces 9 and 11 may be provided with such locking contours 14 and 15. In particular, the inner conical surface 9 of the tubular connecting piece 7 of the attachment part 3 may be provided with a rip-shaped projection 23 extending radially outwards from the conical surface, wherein such outwardly projecting locking contour 14 may be provided on a middle section of the conical surface 9 as it is shown by the left side portion of the inner tubular portion 17. In the alternative or in addition, the said outwardly projecting locking contour 14 also may be provided at an edge or end portion of the conical surface 9 as it is shown by the right hand portion of the tubular portion 17 of Fig. 3.

To allow for form-fitting engagement of said projection 23 with a contour provided on the inner conical surface 9 of the neck 4, the inner peripheral conical surface 11 may be provided with a recess adapted to receive projection 23 when neck 4 is in press-fitting engagement with the attachment part 3. Depending on the positioning and arrangement of the projection 23, the cooperating recess 24 may be provided in a middle section of the inner conical surface 11 or at an end portion thereof. To achieve precise holding of the attachment part 3, the locking contours 14 and 15 may be configured so as to get into engagement with each other only when both pairs of cooperating conical surfaces 9 and 11 and 10 and 12, respectively, are in press-fitting engagement with each other.

In addition or alternatively, the pair of locking contours 14, 15 may include a ring-shaped projection formed on the inner conical surface 11 of the neck 4 and a cooperating recess 24 formed in the inner conical surface 9 of the attachment part 3. Furthermore, in addition or alternatively to such locking contours 14, 15 provided on the inner conical surfaces 9, 11, also the pair of outer conical surfaces 10, 12 may be provided with such cooperating undercut locking contours, wherein the recess may be provided in the conical surface of neck 4 and/or in the conical surface of the attachment part 3, and the cooperating projection can be provided in the conical surface of the neck 4 and/or in the conical surface of the attachment part 3.

To couple the attachment part 3 onto the neck 4 of the handle section 2, the attachment part 3 and the neck 4 of the handle section 2 may be moved relative to each other so as to approach each other or get closer to each other, wherein such axial movement can be parallel to the longitudinal axis 19 of toothbrush 1. The neck 4 may be inserted into groove 13 between the inner and outer tubular portions 17, 18 of the connecting piece 7. When further pushing the attachment part 3 and the handle section 2 onto each other, the pairs of inner and outer conical surfaces 9, 11 and 10, 12 come into snugly fitting engagement with each other. During such approaching procedure, the locking contours 14 and 15 are caused to deflect, wherein in particular the inner tubular portion 17 may be deflected inwardly in an elastic manner so as to allow the projection 23 to slide over the conical surface 11 before it reaches the cooperating recess 24. When such recess 24 is reached, the portion of the cone where the projection 23 is provided may flex outwardly back into or towards its undeflected positioning, thereby achieving form-fitting or locking of the structures.

To decouple the attachment part 3 from handle section 2, the attachment part 3 and the handle section 2 can be pulled apart from each other along the longitudinal axis 19, wherein first the locking contours 14, 15 get out of engagement with each other by means of radial deflection of the respective conical surfaces. As can be seen in Fig. 3, the projection 23 and/or the recess 24 of locking contours 14, 15 may be provided with an undercut surface 16 which, in the locking position, provides for the locking engagement. To allow for decoupling with limited axial forces, such undercut surface 16 may be configured to define an obtuse angle relative to the conical surface 9, 11, wherein such obtuse angle 25 may range from 91° to 120°, from 91° to 110°or from 95° to 100° or any other numerical range which is narrower and which falls within such broader numerical range, as if such narrower numerical ranges were all expressly written herein.

By coupling and uncoupling the attachment part 3 to and from handle section 2, also drive shaft 5 is coupled and uncoupled to and from attachment shaft 8. To provide connection of these two shaft parts allowing for transmission of forces and moments, in particular axial and/or radial forces and moments about an axis of rotation substantially in line with the longitudinal axis of said shafts, end portions of the drive shaft 5 and the attachment shaft 8 may be provided with conical surfaces 26, 27 snugly fitting to each other, wherein such conical surfaces 26, 27 may have non-circular cross-sections to allow for transmission of rotational action. In particular, the drive shaft 5 may be provided with an end portion having a conical, truncated or frustum shape. In addition or alternatively, the attachment shaft 8 may be provided with a cup-shaped recess having conical peripheral surfaces so that the end portion of drive shaft 5 may be inserted into such recess in attachment shaft 8. The angle of these conical surfaces 26, 27 may vary, wherein an angle of inclination ranging from 2x1.5° to 2x10°, or from 2x2° to 2x5° or any other numerical range which is narrower and which falls within such broader numerical range, as if such narrower numerical ranges were all expressly written herein may be chosen. Such angle of inclination of the cones of the drive shaft 5 and attachment shaft 8 may differ from the angle of inclination of the cones of the connecting piece 7 and neck 4.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An attachment part (3) for an electric toothbrush (1), comprising a tubular connecting piece (7) adapted to be connected to a neck (4) of a handle section (2) of the toothbrush (1), wherein the connecting piece (7) having an inner and outer tubular structure forming a double-cone comprising an inner and an outer conical surface (9, 10) that face each other and that define an essentially ring-shaped groove (13) there between, wherein the inner and outer conical surfaces (9, 10) are adapted to be engaged with inner and outer conical surfaces (11, 12) of the neck (4) of the handle section (2).

2. The attachment part (3) according to the preceding claim, wherein the inner conical surface (9) to be engaged with the inner conical surface (11) of the neck (4) of the handle section (2) has a cross-sectional diameter becoming smaller towards the handle section-sided end of the tubular connecting piece (7), whereas the outer conical surface (10) to be engaged with the outer conical surface (12) of the neck (4) of the handle section (2) has a cross-sectional diameter becoming larger towards the handle section-sided end of the tubular connecting piece (7).

3. The attachment part (3) according to anyone of the preceding claims, wherein said conical surfaces are positioned coaxially to each other and/or at axial portions of the connecting piece (7) overlapping each other.

4. The attachment part (3) according to anyone of the preceding claims, wherein the dimension of the inner conical surface (9) is larger than the dimension of the outer conical surface (10) in the longitudinal direction of the attachment part (3).

5. The attachment part (3) according to anyone of the preceding claims, wherein at least one of said conical surfaces (9, 10) is provided with an undercut locking contour (14) adapted to be brought into form-fitting engagement with a locking contour (15) of the inner and/or outer conical surface (11, 12) of the neck of the handle section (2), in particular wherein the undercut locking contour (14) is a projection and/or a recess.

6. The attachment part (3) according to the preceding claim, wherein said locking contour (14) of the conical surface (9) includes a rip-shaped and/or thorn-like projection extending radially outwards from the inner one of said conical surfaces (9), in particular from a middle portion or an end portion of said conical surface (9).

7. The attachment part (3) according to anyone of the two preceding claims, wherein said locking contour (14) of the conical surface (9, 10) is adapted to hold both conical surfaces (9, 10) in press-fitting engagement with the inner and outer conical surfaces (11, 12) of the neck (4) of the handle section (2) and/or is adapted to be engageable with the locking contour (15) at the inner and/or outer conical surface of neck (4) of the handle section (2) only when both conical surfaces (9, 10) are in press-fitting engagement with the inner and outer conical surfaces (11, 12) of the neck (4) of the handle section (2).

8. The attachment part (3) according to one of claims 5 to 7, wherein said locking contour (14) of the conical surface includes an undercut surface (16) radially extending from the inner conical surface at an angle of more than 90°, in particular of more than 95°, relative to the conical surface (9).

9. The attachment part (3) according to anyone of the preceding claims, wherein said conical surfaces (9, 10) are inclined at different angles, wherein one of said conical surfaces (10) defines an angle of inclination of 2x1.5° to 2x6° and the other one of said conical surfaces (9) defines an angle of inclination of 2x3° to 2x10°, wherein more particularly the inner conical surfaces (9) defines an angle of inclination of 2x7° and the outer conical surfaces (10) defines and angle of inclination of 2x3.5°.

10. The attachment part (3) according to anyone of the preceding claims, wherein at least one of said conical surfaces (9, 10) defines a circular cross-section and/or a closed-ring shaped cross-section fully extending over 360°.

11. A handle section (2) of an electric toothbrush (1), comprising a neck (4) having a double-cone of an inner and an outer conical surface (11, 12) adapted to be engaged with inner and outer conical surfaces (9, 10) of an attachment part (3), wherein both the inner and outer conical surfaces (11, 12) of the neck are oriented into opposite directions with respect to each other.

12. The handle section (2) according to claim 11, wherein the conical surfaces (11, 12) of the neck are oriented such that the thickness of the neck (4) becomes smaller towards the free end of the neck (4).

13. The handle section (2) according to the anyone of claims 11 or 12, wherein said conical surfaces (11, 12) of the neck are inclined at different angles, wherein one of said conical surfaces (12) defines an angle of inclination of 2x1.5° to 2x6° and the other one of said conical surfaces (11) defines an angle of inclination of 2x3° to 2x10°, wherein more particularly the inner conical surface (11) defines an angle of inclination of 2x7° and the outer conical surface (12) defines and angle of inclination of 2x3.5°.

14. The handle section (2) according to anyone of claims 11 to 13, wherein at least one of said conical surfaces (11, 12) is provided with an undercut locking contour (15) adapted to be brought into form-fitting engagement with a locking contour (14) of the inner and/or outer conical surface (9, 10) of the attachment part (3), in particular, wherein the undercut locking contour (15) is a projection and/or a recess.

15. A toothbrush (1) comprising a handle section (2) according to anyone of claims 11 to 14 and an attachment part (3) according to anyone of claims 1 to 10.
